# EUROPEAN PATENT SPECIFICATION

(11) **EP 1 608 569 B1**
(45) Date of publication and mention of the grant of the patent: **03.01.2007**
(21) Application number: 03789007.6
(22) Date of filing: 05.11.2003
(51) Int. Cl.: B65D 81/00

(54) **SINGLE-DOSE PLASTIC CAPSULE FOR POWDERED COFFEE AND THE LIKE**
PLASTIKKAPSEL FÜR EINE EINZELDOSIS GEMAHLENEN KAFFEES UND ÄHNLICHEM
CAPSULE PLASTIQUE MONODOSE POUR CAFE EN POUDRE ET ANALOGUE

(30) Priority: 02.04.2003 IT TV20030058
(43) Date of publication of application: 28.12.2005
(73) Proprietor: Hausbrandt Trieste 1892 SPA, 31040 Nervesa della Battaglia (treviso) (IT)
(72) Inventor: ZANETTI, Martino, I-31050 Villorba (Treviso) (IT)
(74) Representative: Agostini, Agostino
(86) International application number: PCT/EP2003/012338
(87) International publication number: WO 2004/087529

(56) References cited:
- EP-A- 0 468 079
- EP-A- 0 512 148
- WO-A-03/082065
- US-A- 5 287 797

## Description

The present invention relates to a single-dose capsule made of moulded plastic and intended for coffee and other alimentary raw materials which are used for the preparation of beverages by means of percolation.

A capsule consists essentially of a casing with a frustoconical shape which is filled with coffee powder (or other powdery raw material) and has a peripheral edge onto which a sealing foil is applied. Said foil, at the time of use of the capsule in a professional and/or domestic machine for the preparation of *espresso* coffee and/or other hot beverages, is directed downwards, namely on the opposite side to the point of entry of the hot water under pressure into the capsule.

As a typical example of the state of the art, the Applicant cites the European patent EP-A-0 521 510 where it is envisaged forming, with the said foil, the flat bottom of the capsule and creating zones of reduced thickness so as to favour tearing of the foil at the time of preparation of the beverage, under the pressure of the water which passes through the powdery raw material in a vertical direction of flow.

The resultant percolated beverage is conveyed along inaccessible pipes inside the coffee machine and then dispensed.

The use of conventional capsules - owing to their particular constructional design - has the drawback that, since it is not possible to ensure the absolute cleanliness of the said internal pipes, there is the risk of fermentation or putrefaction of the fatty substances contained in the beverage (in particular in coffee). The least negative consequence is an undesirable alteration of the taste of the beverage.

Moreover, it is more difficult, compared to the use of loose coffee powder, to obtain the emulsification of the fatty substances in the coffee - namely the creamy coffee texture which makes Italian-style *espresso* coffee so popular world-wide - precisely owing to the presence of said pipes.

Other documents representing the state of art are EP-A-469 079, which is considered to represent the closest prior art, EP-A-512 148 and US-A-5 287 797.

The object of the present invention is to provide a moulded-plastic capsule intended for coffee and other raw materials for the preparation of beverages by means of percolation, which does not have the abovementioned drawback and which allows high-quality beverages to be obtained.

These and other objects are achieved by providing a capsule having the characteristic features of the appended claims, as will be clarified by the following description of a non-exclusive embodiment withh reference to the accompanying drawing in which:
- Fig. 1 is a three-dimensional view, from above, of an open capsule according to the invention;
- Fig. 2 is a three-dimensional view from below;
- Fig. 3 is a plan view from above;
- Fig. 4 is a cross-section through the said capsule along line A-A in Fig. 3.

A capsule according to the invention consists of a casing 10 with a slightly frustoconical shape which is made by thermoforming a sheet of polypropylene for alimentary use. The casing 10 has a continuous upper peripheral edge 12 projecting outwards and a bottom non-projecting edge 14. The upper edge 12 is designed to be sealed with a foil 13 of plastic material and/or aluminium. A foil of this kind, as well as its function in single-dose containers of alimentary products, is well known per se to persons skilled in the art, so that it is not considered necessary to describe it in further detail.

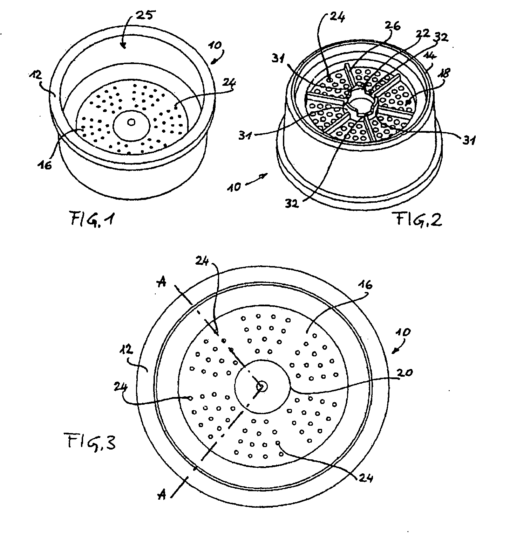

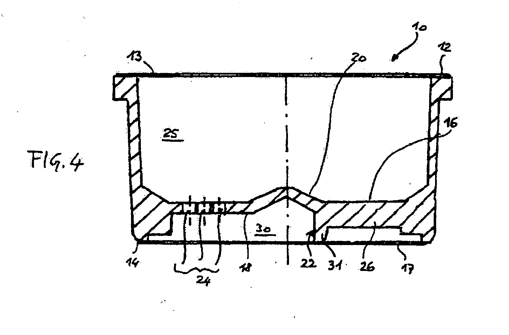

According to a characteristic feature of the invention, the end wall 16 of the casing 10 is inset with respect to the bottom edge 14; basically, as shown in detail in Fig. 4, there exist at least two steps between the edge 14 and the outer surface 18 of the end wall 16. In this way, underneath the upper chamber 25, which contains the powdery raw material, a bottom chamber 30 is formed, said chamber being able to receive and convey the percolated beverage, as explained more fully below, and being closed by a second foil 17. This second foil is preferably formed by a triple layer of film combined with aluminium so as to ensure that the capsule is impermeable and hygienic, it not being considered necessary to describe said foil in greater detail for the same reasons given above in connection with the foil 13.

According to another characteristic feature of the invention, the end wall 16 of the casing 10 has, around a central core having an upper portion in the shape of conical cusp 20 and a substantially cylindrical lower portion 22, consisting of several longer cylindrical segments 31 separated from one another by shorter cylindrical segments 32 (see Fig. 2), a plurality of orifices 24 which are distributed in segments separated by radial ribs 26 (see Figs. 2 and 4).

The present capsule is used in a machine equipped with punching or drilling means able to create in the upper foil 13 a path (not shown) for the incoming pressurized hot water and a spout (also not shown) directly in the second foil 17, immediately before the start of the percolation of the beverage through the orifices 24. Owing to the combined effect of the pressurized hot water fed from above into the capsule and the shape of the end wall 16, in particular the radial ribs 26, the beverage fills the abovementioned bottom chamber 30 with a turbulent movement which favours emulsification of the fatty substances. In this way, for example an Italian-style creamy coffee of excellent quality is obtained.

Moreover, the beverage is dispensed - through the spout created in the second foil 17 - directly into an underlying cup or glass, without being conveyed through the traditional pipes inside the machine and consequently without the risks mentioned hereinabove.

Although the description provided hereinabove relates to a preferred embodiment, it is understood that the invention may be developed with different forms and variants which are included within the following claims.

## Claims

1. Single-dose capsule for the preparation of a percolated beverage using a powdery raw material such as coffee, comprising
- a casing (10) having an upper peripheral edge (12) and a bottom peripheral edge (14) to which an upper sealing foil (13) and a bottom sealing foil (17) are attached, respectively,
- a lower end wall (16) provided with orifices (24) and inset with respect to said bottom edge (14),
- an upper chamber (25) filled with the raw material which is formed between said upper sealing foil (13) and said end wall (16),
**characterized in that** said end wall (16) comprises a central core and a plurality of radial ribs (26) directed downwards around said central core for the separation of the segments in which said orifices (24) are distributed, with the result to form a bottom chamber (30) underneath said upper chamber (25) and that the beverage percolated through the orifices (24) fills said bottom chamber (30) with a turbulent movement prior to be dispensed towards an underlying container through a spout created at the moment of opening or tearing of said bottom sealing foil (17).

2. Single-dose capsule for the preparation of a percolated beverage according to Claim 1, **characterized in that** said central core of the end wall (16) of the capsule has an upper portion in the shape of a conical cusp (20) and a lower portion (22) substantially cylindrical.

3. Single-dose capsule for the preparation of a percolated beverage according to Claim 2, **characterized in that** said substantially cylindrical lower portion (22) of the central core in the end wall (16) of the capsule consists of several longer cylindrical segments (31) separated from one another by shorter cylindrical segments (32).

4. Single-dose capsule for the preparation of a percolated beverage according to Claim 1, **characterized in that** the said bottom sealing foil (17) consists of a triple layer of film combined with aluminium.

5. Single-dose capsule for the preparation of a percolated beverage according to claim 1, **characterized in that** the casing (10) has a slightly frustoconical shape and is made preferably by means of thermoforming with a polypropylene grade compatible with foodstuff.

6. Single-dose capsule for the preparation of a percolated beverage according to claim 1, **characterized in that** the upper edge (12) of the casing (10) is continuous and projecting outwards.

7. Single-dose capsule for the preparation of a percolated beverage according to claim 1, **characterized in that** the bottom edge (14) of the casing (10) is non-projecting.

## Patentansprüche

1. Einzel-Dosis-Kapsel zur Bereitung eines Filtergetränks unter Verwendung eines pulverigen Rohmaterials wie Kaffee, aufweisend
- ein Gehäuse (10), das eine obere Umfangskante (12) und eine untere Umfangskante (14) besitzt, an welchen eine obere Siegelfolie (13) bzw. eine untere Siegelfolie (17) angebracht sind,
- eine untere Endwand (16), die mit Öffnungen (24) versehen ist und bezüglich der unteren Kante (14) eingefügt ist,
- eine obere Kammer (25), die mit dem Rohmaterial gefüllt ist und zwischen der oberen Siegelfolie (13) und der Endwand (16) ausgebildet ist,
**dadurch gekennzeichnet, daß** die Endwand (16) einen zentralen Kern und eine Mehrzahl von radialen Rippen (26), die um den zentralen Kern abwärts ausgerichtet sind, zur Trennung der Segmente, in welchen die Öffnungen (24) verteilt sind, aufweist, mit dem Ergebnis, daß eine Bodenkammer (30) unter der oberen Kammer (25) gebildet wird und daß das durch die Öffnungen (24) perkolierte Getränk die Bodenkammer (30) mit einer Wirbelbewegung füllt, bevor es in Richtung eines unterliegenden Behälters über einen Ausguß ausgegeben wird, der in dem Augenblick der Öffnung oder des Abziehens der unteren Siegelfolie (17) erzeugt wird.

2. Einzel-Dosis-Kapsel zur Bereitung eines Filtergetränks gemäß Anspruch 1, **dadurch gekennzeichnet, daß** der zentrale Kern der Endwand (16) der Kapsel einen oberen Abschnitt in der Form einer konischen Spitze (20) und einen unteren, im wesentlichen zylindrischen Abschnitt (22) aufweist.

3. Einzel-Dosis-Kapsel zur Bereitung eines Filtergetränks gemäß Anspruch 2, **dadurch gekennzeichnet, daß** der im wesentlichen zylindrische untere Abschnitt (22) des zentralen Kerns in der Endwand (16) der Kapsel aus mehreren längeren zylindrischen Segmenten (31) besteht, die durch kürzere zylindrische Segmente (32) voneinander getrennt sind.

4. Einzel-Dosis-Kapsel zur Bereitung eines Filtergetränks gemäß Anspruch 1, **dadurch gekennzeichnet, daß** die untere Siegelfolie (17) aus drei Lagen mit Aluminium kombiniertem Film besteht.

5. Einzel-Dosis-Kapsel zur Bereitung eines Filtergetränks gemäß Anspruch 1, **dadurch gekennzeichnet, daß** das Gehäuse (10) eine leicht kegelstumpfförmige Form aufweist und vorzugsweise mittels eines Thermoformens mit einem nahrungsmittel-qualitätskompatiblen Polypropylen hergestellt ist.

6. Einzel-Dosis-Kapsel zur Bereitung eines Filtergetränks gemäß Anspruch 1, **dadurch gekennzeichnet, daß** die obere Kante (12) des Gehäuses (10) durchgängig ist und auswärts hervorsteht.

7. Einzel-Dosis-Kapsel zur Bereitung eines Filtergetränks gemäß Anspruch 1, **dadurch gekennzeichnet, daß** die untere Kante (14) des Gehäuses (10) nicht hervorsteht.

## Revendications

1. Capsule monodose pour la préparation d'une boisson percolée en utilisant une matière brute en poudre telle que du café, comprenant
un boîtier (10) ayant un bord périphérique supérieur (12) et un bord périphérique inférieur (14) auxquels une feuille étanche supérieure (13) et une feuille étanche inférieure (17) sont fixées, respectivement,
une paroi d'extrémité inférieure (16) pourvue d'orifices (24) et insérée par rapport audit bord inférieur (14),
une chambre supérieure (25) remplie de matière brute qui est formée entre ladite feuille étanche supérieure (13) et ladite paroi d'extrémité (16),
**caractérisée en ce que** ladite paroi d'extrémité (16) comprend un noyau central et une pluralité de nervures radiales (26) dirigées vers le bas autour dudit noyau central pour la séparation des segments dans lesquels lesdits orifices (24) sont distribués, avec pour résultat la formation d'une chambre inférieure (30) sous ladite chambre supérieure (25) et **en ce que** la boisson percolée à travers les orifices (24) remplit ladite chambre inférieure (30) avec un mouvement turbulent avant d'être distribuée vers un récipient sous-jacent à travers une goulotte créée au moment de l'ouverture ou du déchirage de ladite feuille étanche inférieure (17).

2. Capsule monodose pour la préparation d'une boisson percolée selon la revendication 1, **caractérisée en ce que** ledit noyau central de la paroi d'extrémité (16) de la capsule a une partie supérieure sous la forme d'une cuspide conique (20) et une partie inférieure (22) sensiblement cylindrique.

3. Capsule monodose pour la préparation d'une boisson percolée selon la revendication 2, **caractérisée en ce que** ladite partie inférieure sensiblement cylindrique (22) du noyau central dans la paroi d'extrémité (16) de la capsule consiste en plusieurs segments cylindriques plus longs (31) séparés les uns des autres par des segments cylindriques plus courts (32).

4. Capsule monodose pour la préparation d'une boisson percolée selon la revendication 1, **caractérisée en ce que** ladite feuille étanche inférieure (17) comprend une triple couche de film associée à de l'aluminium.

5. Capsule monodose pour la préparation d'une boisson percolée selon la revendication 1, **caractérisée en ce que** le boîtier (10) a une forme légèrement tronconique et est faite de préférence par thermoformage avec une qualité de polypropylène compatible avec les denrées alimentaires.

6. Capsule monodose pour la préparation d'une boisson percolée selon la revendication 1, **caractérisée en ce que** le bord supérieur (12) du boîtier (10) est continu et fait saillie vers l'extérieur.

7. Capsule monodose pour la préparation d'une boisson percolée selon la revendication 1, **caractérisée en ce que** le bord inférieur (14) du boîtier (10) n'est pas en saillie.
